# EUROPÄISCHE PATENTSCHRIFT

(11) **EP 1 658 575 B1**
(45) Veröffentlichungstag und Bekanntmachung des Hinweises auf die Patenterteilung: **12.12.2007**
(21) Anmeldenummer: 04762713.8
(22) Anmeldetag: 25.08.2004
(51) Int. Cl.: G06K 7/00, G07F 7/10, G06F 12/14

(54) **DATENÜBERTRAGUNGSSYSTEM UND VERFAHREN ZUM BETREIBEN EINES DATENÜBERTRAGUNGSSYSTEMS**
DATA TRANSMISSION SYSTEM AND METHOD FOR OPERATING A DATA TRANSMISSION SYSTEM
SYSTEME DE TRANSMISSION DE DONNEES ET PROCEDE POUR FAIRE FONCTIONNER UN SYSTEME DE TRANSMISSION DE DONNEES

(30) Priorität: 26.08.2003 DE 10339212
(43) Veröffentlichungstag der Anmeldung: 24.05.2006
(73) Patentinhaber: RF-IT Solutions GmbH, 8020 Graz (AT)
(72) Erfinder: GAUBY, Alexander, A-8010 Graz (AT); HABERLER, Berthold, A-4020 Linz (AT)
(74) Vertreter: Epping - Hermann - Fischer
(86) Internationale Anmeldenummer: PCT/DE2004/001880
(87) Internationale Veröffentlichungsnummer: WO 2005/024703

(56) Entgegenhaltungen:
- EP-A1- 1 065 598
- US-A- 5 912 453
- US-A1- 2002 073 293

## Beschreibung

Die vorliegende Erfindung betrifft ein Datenübertragungssystem und ein Verfahren zum Betrieben eines Datenübertragungssystems.

Datenübertragungssysteme, insbesondere Übertragungssysteme mit sogenannten kontaktlosen Chipkarten, ermöglichen einen Datenaustausch zwischen einem Datenträger und einem meist stationären Schreib/Lesegerät mit dem Ziel beispielsweise einer Identifizierung des Karteninhabers, zur Bewirkung einer bargeldlosen Bezahlung oder ähnlichem.

Einer der wesentlichen Vorteile eines solchen Datenübertragungssystems besteht in der vielfältigen Verwendungsmöglichkeit seitens des Karteninhabers. Die im Datenträger integrierten Speichermittel erlauben das Abspeichern bestimmter Anwendungen bzw. Applikationen, welche aus mehreren Funktionen oder Parametern, beispielsweise zur Sicherheitsüberprüfung, bestehen können.
Der Speicher eines Datenträgers ist gemäß dem Stand der Technik in Sektoren aufgeteilt, die aus einzelnen Zeilen aufgebaut sind. Die Anzahl der Zeilen ist in Abhängigkeit von der Größe der Applikation gewählt. Zum Schutz hochsensibler Daten sind auf dem Speicher des Datenträgers mehrere Schlüssel abgelegt, die einem Sektor, der zu einer Applikation gehört, zugeordnet sind und die beispielsweise nur zum Lesen, zum Lesen und Schreiben von Daten oder zum Abbuchen, zum Auf- und Abbuchen von Werten berechtigen.

Zum Zugriff auf die auf dem Datenträger abgelegten ausführbaren Applikationen sind dem Datenübertragungssystem in der Regel statisch festgelegte Startadressen des der einzelnen Anwendung zugeordneten Sektors bekannt, so dass jeder Anwendung eine feste Startadresse innerhalb des Speichers zugeordnet ist. Ist jedoch in einem speziellen Anwendungsbereich des Datenträgers die Ausführung einer Applikation nicht vorgesehen, bleibt das Datensegment bzw. der für diese Applikation vorgesehene Sektor ungenutzt. Der Speicherplatz ist somit zwar nicht mit Daten belegt, kann jedoch einer weiteren Applikation nicht zugeteilt werden, da er in einem reservierten Status verbleiben muss. Ebenso nachteilig ist der Einsatz einer im Speicher abgelegten Tabelle, die Identifikationsnummern der Applikationen Startadressen der Sektoren zuordnet. Um eine Eindeutigkeit der Identifikationsnummern sicherzustellen, müssen diese eine bestimmte Anzahl an Bits aufweisen. Weiterhin führt das Suchen einer Startadresse einer Applikation dazu, dass die ganze Tabelle durchsucht werden muss, was die Datenverarbeitungszeit nachteiligerweise erhöht.

Aus der US2002/0073293 A1 ist ein Datenübertragungssystem bekannt, dessen Datenträger in einen statischen und zwei dynamische Datenträgerbereiche unterteilt ist. Während der statische Bereich Daten beinhaltet, die zum Indexbereich und somit zum ersten dynamischen Datenträgerbereich zeigen, beinhaltet der Indexbereich Daten, welche wiederum auf die ausführbare Applikation zeigen.

Weiterhin ist aus der US 5,912,453 ein Verfahren bekannt, mit welchem mehrere Applikationen auf einem Datenspeicher hinterlegt, separiert und voneinander gekoppelt werden können. Ziel hierbei ist die Verhinderung des Zugriffs einer beliebigen Applikation auf eine andere, sich auf dem Datenträger befindlichen Applikation.

In der EP 1065598A1 wird ein Verfahren zum Zugriff auf einen Speicher und Speichereinrichtungen beschrieben. Durch Vergabe einer Zeilenlinknummer an jede Programmzeile der Applikation erfolgt eine Anpassung sowie Zuordnung von Datenträgersektoren an die jeweilige Anwendung.

Aufgabe der Erfindung ist es nun, ein Datenverarbeitungssystem und ein Verfahren zum Betreiben dieses Datenverarbeitungssystems derart zu gestalten, dass die Datenverarbeitungszeit wesentlich verkürzt und die Ausnutzung des Speichers optimal wird.

Die Erfindung löst diese Aufgabe durch die kennzeichnenden Merkmale des Anspruchs 1.

Die Erfindung löst diese Aufgabe verfahrensgemäß durch die Kennzeichnenden Merkmale des Anspruchs 12.

Das Applikationsverzeichnis stellt eine Tabelle von Startadressen von Sektoren dar, denen eine Applikation zugeordnet sein kann. Um auf eine Applikation zuzugreifen, kann der exakte Tabelleneintrag des Applikationsverzeichnisses aufgrund der dem Schreib-/Lesegerät bekannten logischen Applikationsnummer sofort ausgelesen werden, ohne das gesamte Verzeichnis auszulesen. Im nächsten Schritt wird die der logischen Applikationsnummer zugeordnete Startadresse des der Applikation zugeordneten Sektors genutzt, um die Applikation auszuführen.

In einer vorteilhaften Ausführungsform ist die Startadresse der Applikation in einem Sektor durch die jeweilige Speicherposition der logischen Applikationsnummer innerhalb des Applikationsverzeichnisses codiert. Die Anordnung der Applikationen innerhalb des Speichers bzw. die Zuordnung zu einem Sektor kann somit unabhängig und völlig flexibel gehandhabt werden.

In vorteilhafter Weise kann beispielsweise eine Applikation A mit einer logischen Applikationsnummer "1" jederzeit gelöscht werden, so dass der Speicherplatz bzw. dieser frei gewordene Sektor A1 für eine programmierbare neue Applikation B zur Verfügung steht. Dem Datenübertragungssystem ist beispielsweise für die neue Applikation B die logische Applikationsnummer "2" bekannt, die im Applikationsverzeichnis an die Speicherposition der logischen Applikationsnummer "2" geschrieben wird. Unabhängig davon kann der Applikation B die ehemalige Startadresse des Sektors A1 zugeordnet werden. Zusätzlich wird der Eintrag der logischen Applikationsnummer "1" dazu genutzt, um anzuzeigen, dass sich die Applikation A nun nicht mehr im Speicher des Datenträgers befindet.

Das Attribut zur Kennzeichnung des Anwendungsbereichs des Datenträgers wird in vorteilhafter Weise dazu genutzt, um festzustellen, ob der einem Anwendungsbereich zugeordnete vorliegende Datenträger die Ausführung einer bestimmten Applikation vorsieht. Das Attribut belegt die ersten Bits des Applikationsverzeichnisses, wobei das Attribut in zwei Teile unterteilt werden kann, wobei ein Teil, beispielsweise die niederwertigen Bits, zur Spezifizierung des Datenträgers und ein weiterer Teil, beispielsweise die höherwertigen Bits, zur Angabe des Anwendungsbereichs dienen, wobei für jeden Anwendungsbereich zulässige ausführbare Applikationen frei festlegbar sind.

Besonders vorteilhaft ist es, dass der logischen Applikationsnummer nicht nur eine Startadresse des Sektors, sondern auch eine Schlüsselnummer zugeordnet ist. Das Schreib-/Lesegerät liest die Schlüsselnummer bei dem durch einen Schlüssel vor einem unberechtigten Zugriff geschützten Sektor aus und greift auf eine im Speicher des Schreib-/Lesegerätes abgelegte Tabelle zu, in der der Schlüsselnummer eine physikalische Speicheradresse des Speichers im Datenträger des für den Zugriff auf den Sektor notwendigen Schlüssels zugeordnet ist.

Eine weitere vorteilhafte Ausführungsform sieht vor, dass die Anzahl der ausführbaren Applikationen durch die Anzahl der im Applikationsverzeichnis aufgeführten logischen Applikationsnummern beschränkt wird. Spezielle, dem Datenübertragungssystem bekannte logische Applikationsnummern können dazu verwendet werden, Startadressen des nächst verfügbaren Sektors zum Programmieren einer neuen Applikation oder momentan nicht genutzte, jedoch ehemals einer Applikation bereits zugeordnete Sektoren anzugeben oder auf ein im Datenträger abgelegtes weiteres Applikationsverzeichnis zu verweisen. Dieses weitere Applikationsverzeichnis ermöglicht den Zugang zu weiteren Sektoren und somit die Ausführung weiterer Applikationen.

Weitere vorteilhafte Ausgestaltungen der Erfindung sind in den Unteransprüchen angegeben.

Nachfolgend wird die Erfindung anhand von Ausführungsbeispielen mit Bezugnahme auf die Figuren näher erläutert. Gleiche oder sich entsprechende Elemente in verschiedenen Figuren sind mit gleichen Bezugszeichen versehen.

Es zeigen

Figur 1 ein Blockdiagramm der Speicherorganisation eines Speichers eines Datenträgers eines erfindungsgemäßen Datenübertragungssystems,

Figur 2 ein detailliertes Ausführungsbeispiel eines Applikationsverzeichnisses,

Figur 3 ein Ausführungsbeispiel einer im Speicher des Schreib-/Lesegerätes abgelegten Tabelle und

Figur 4a bis 4c eine detaillierte Darstellung der in Figur 1 gezeigten Speicherorganisation des Speichers.

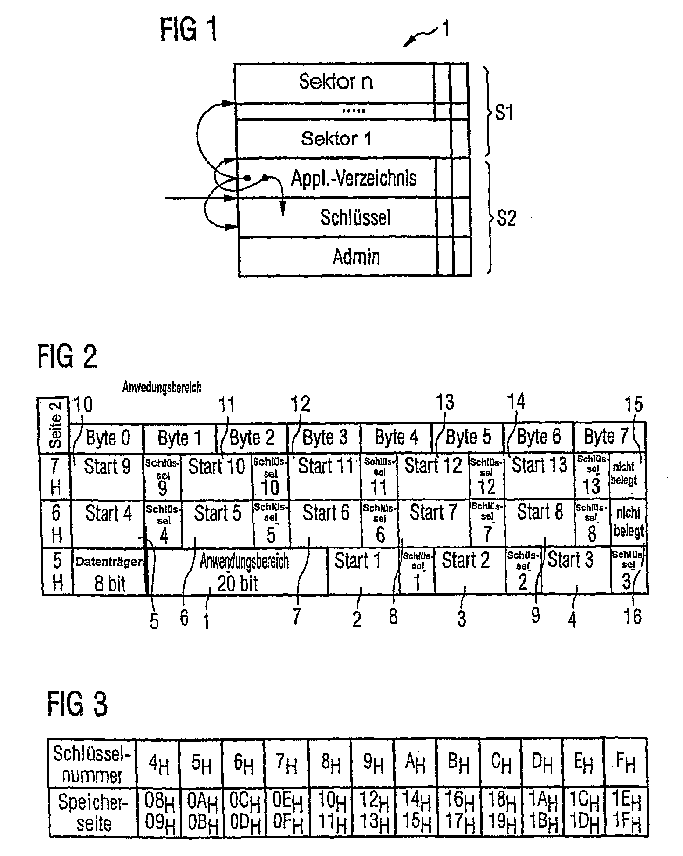

In der Figur 1 ist die Speicherorganisation eines Speichers eines hier nicht gezeigten Datenträgers eines erfindungsgemäßen Datenübertragungssystems dargestellt. Ein Speicher 1 weist in einem Speicherbereich S1 Sektoren 1 bis n auf, in denen zumindest eine Applikation, beispielsweise zum Abbuchen eines Geldwertes, abgelegt ist. In einem Speicherbereich S2, der weitere Sektoren aufweist, sind ein Applikationsverzeichnis, Schlüssel sowie Administrationsdaten abgelegt. Das Applikationsverzeichnis ist dabei als 8-byte breiter Datenblock in Speicherseiten des Speicherbereichs S2 abgelegt.

Innerhalb des Datenübertragungssystems müssen globale, für die Teilnehmer, also für das Schreib-/Lesegerät und den Datenträger, bekannte, Default-Parameter eingestellt werden, die eine sinnvolle Nutzung des Systems erlauben. Es können beispielsweise folgende Konventionen vereinbart werden:
- maximale Anzahl für Applikationen nutzbare Sektoren,
- Anzahl der Schlüssel pro Sektor,
- Startadresse des Speicherbereichs bzw. des Sektors, an der das Applikationsverzeichnis abgelegt ist,
- eine festgelegte maximale Größe des Applikationsverzeichnisses und
- ein Schutz des Applikationsverzeichnisses durch Verschlüsselung.

Eine maximale Anzahl nutzbarer Sektoren impliziert gleichzeitig eine maximale Anzahl der für diesen Datenträger zu verwendender Schlüssel. Bei Speichern geringer Größe kann die Anzahl notwendiger Schlüssel pro Sektor auf die Anzahl 1 reduziert werden.

Figur 2 zeigt ein detailliertes Ausführungsbeispiel eines Applikationsverzeichnisses. Das Applikationsverzeichnis ist als 8-byte breiter Datenblock auf 3 Speicherseiten 5H, 6H, 7H des Speicherbereichs S2 im Speicher 1 abgelegt. Die Größe des Datenblocks sowie die Anzahl der Speicherseiten 5H, 6H, 7H begrenzen die Anzahl möglicher Einträge logischer Applikationsnummern. Ein Attribut zur Kennzeichnung des Anwendungsbereichs des Datenträgers belegt im Feld 1 die ersten 28 Bit des Applikationsverzeichnisses. Die ersten 8 Bit kennzeichnen den Datenträger selbst, während die weiteren 20 Bit zur Kennzeichnung des Anwendungsbereichs genutzt sind. Es kann somit eine eindeutige Zuordnung des Datenträgers zu dem erlaubten Anwendungsbereich und der in diesem Anwendungsbereich vorgesehenen Applikationen getroffen werden. Eine logische Applikationsnummer "1" belegt im Feld 2 der Speicherseite 5H 8 Bit, die ihr zugeordnete Schlüsselnummer 4 Bit. Weitere Felder 3 bis 14 enthalten die Startadressen mit zugehörigen Schlüsselnummern weiterer logischer Applikationen. Die Felder 15 und 16 sind nicht belegt und zukünftigen Daten vorenthalten.

In dem Applikationsverzeichnis sind den logischen Applikationsnummern somit Startadressen von Sektoren zugeordnet, dass heißt, eine Startadresse ist als Eintrag im Applikationsverzeichnis abgelegt, wobei die logische Applikationsnummer als Index innerhalb des Applikationsverzeichnisses verwendet wird und die Speicherposition des Eintrags der logischen Applikationsnummer entspricht und diese damit codiert.

Zur Ausführung einer den Sektoren zugeordneten Applikation liest das Schreib-/Lesegerät das Attribut des Feldes 1 aus und verifiziert, ob dem Datenträger ein Anwendungsbereich zugeordnet ist, der die Ausführung der gewünschten Applikation vorsieht. Ist das Ergebnis positiv, dass heißt, die Applikation kann ausgeführt werden und/oder ist in dem Speicher des Datenträgers abgelegt, verwendet das Schreib-/Lesegerät eine der ausführbaren Applikation korrespondierende logische Applikationsnummer im Applikationsverzeichnis als Index, um eine Startadresse eines Sektors des Speichers, in dem die ausführbare Applikation abgelegt ist, auszulesen. Indiziert das Schreib-/Lesegerät beispielsweise die logischen Applikationsnummer "1" im Feld 2, wird aufgrund der Codierung der Startadresse des Sektors, in dem die Applikation startet, durch die Speicherposition im Feld 2 direkt auf die Startadresse verwiesen. Weiterhin erfolgt die Auswertung der der logischen Applikationsnummer zugeordneten Schlüsselnummer. Hierzu wird eine in der folgenden Figur 3 beschriebene Tabelle ausgelesen.

In der Figur 3 ist ein Ausführungsbeispiel einer in einem Speicher des Schreib-/Lesegerätes abgelegten Tabelle mit Zuordnungen von Schlüsselnummern zur Speicherposition eines Schlüssels im Speichers des Datenträgers dargestellt. Schreib- und/oder Leseoperationen eines geschützten Sektors bedürfen eines Schlüssels, um entsprechende Zugriffe ausführen zu können. In den Feldern einer ersten Zeile der Tabelle befinden sich die logischen Schlüsselnummern. In Feldern einer zweiten Zeile der Tabelle sind diese den physikalischen Speicheradressen, in denen die für den Zugriff auf die Sektoren notwendigen Schlüssel abgelegt sind, zugeordnet.

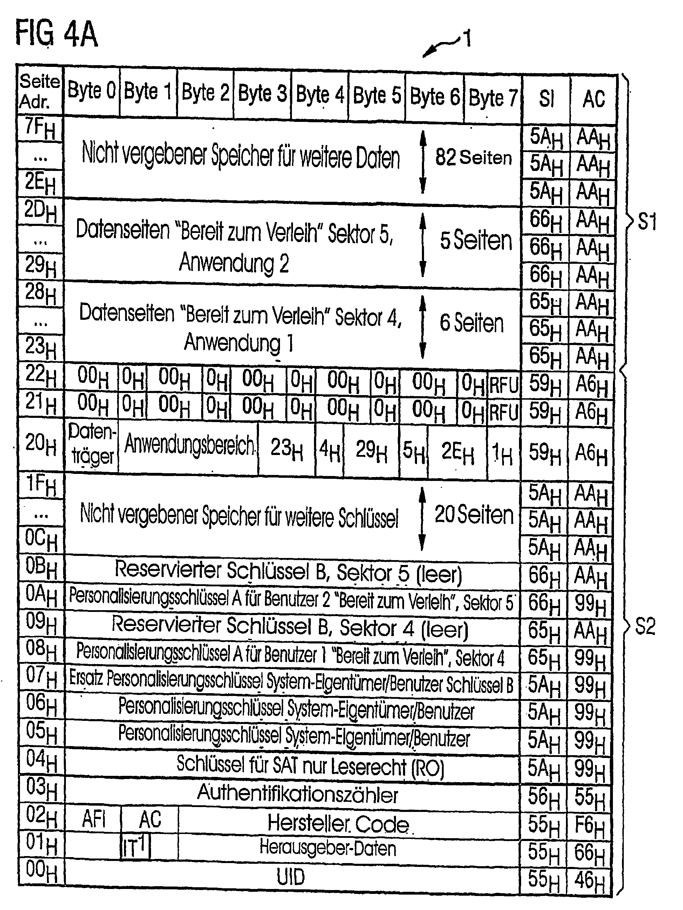

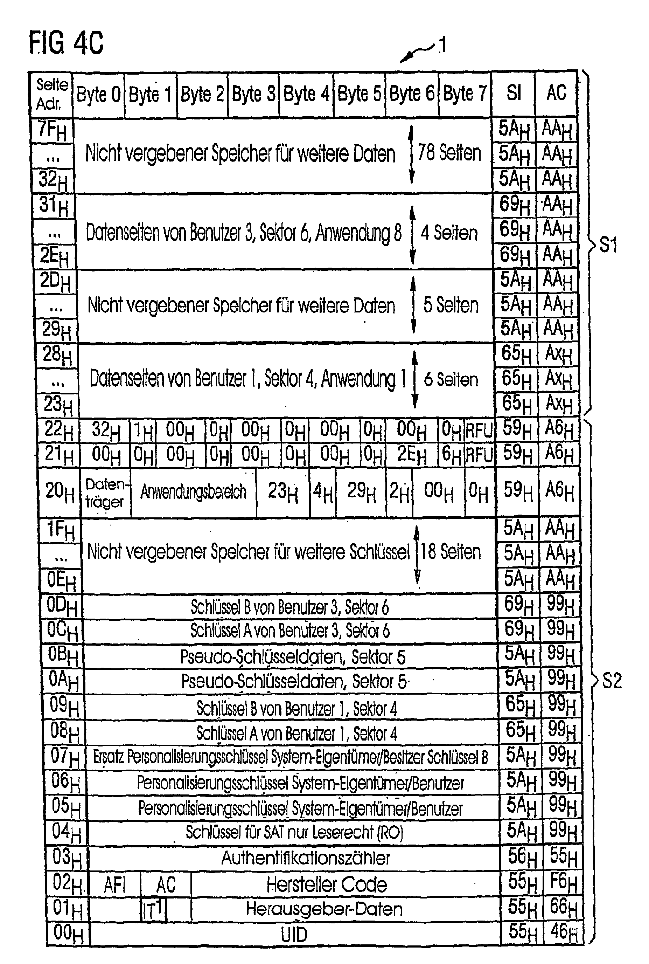

Die Figuren 4a bis 4c zeigen eine detaillierte Darstellung der in Figur 1 gezeigten Speicherorganisation des Speichers 1. In Figur 4a sind im Speicherbereich S2 in den Speicherseiten 04 bis 0B Schlüssel und in Speicherseiten 20 bis 22 das Applikationsverzeichnis abgelegt. Speicherseiten 0C bis 1F stehen zum Abspeichern weiterer Schlüssel zur Verfügung. Im Speicherbereich S1 sind 2 Sektoren 4, 5 einer Applikation zugeordnet, wobei die erste Applikation im ersten Sektors 4 sechs Speicherseiten 23 bis 28 und die zweite Applikation im zweiten Sektor 5 fünf Speicherseiten 29 bis 2D belegen. Weitere Speicherseiten 2E bis 7F stehen für das Programmieren weiterer Applikationen zur Verfügung. Im Feld 2 des Applikationsverzeichnisses ist die Startadresse der ersten Applikation und die zum Zugriff auf den Sektor notwendige Schlüsselnummer als Eintrag abgelegt, so dass dieser erste Eintrag im Applikationsverzeichnis der ersten Applikation die logische Applikationsnummer "1" zuordnet, da dies der ersten Speicherposition im Applikationsverzeichnis entspricht. Analoges gilt für die zweite Applikation, deren Startadresse im Feld 3, dass heißt der zweiten Speicherposition, des Applikationsverzeichnisses als Eintrag abgelegt ist, so dass die zweite Applikation die logische Applikationsnummer 2" aufweist. Die dem ersten Sektor zugeordnete Schlüsselnummer "4" verweist gemäß der Tabelle der Figur 3 auf die Speicheradressen 08 und 09, an der der für den Zugriff auf diesen ersten Sektor notwendigen Schlüssel abgelegt sind. Analog hierzu verweist die der logischen Applikationsnummer "2" zugeordnete Schlüsselnummer "5" auf die Speicheradresse 0A und OB.

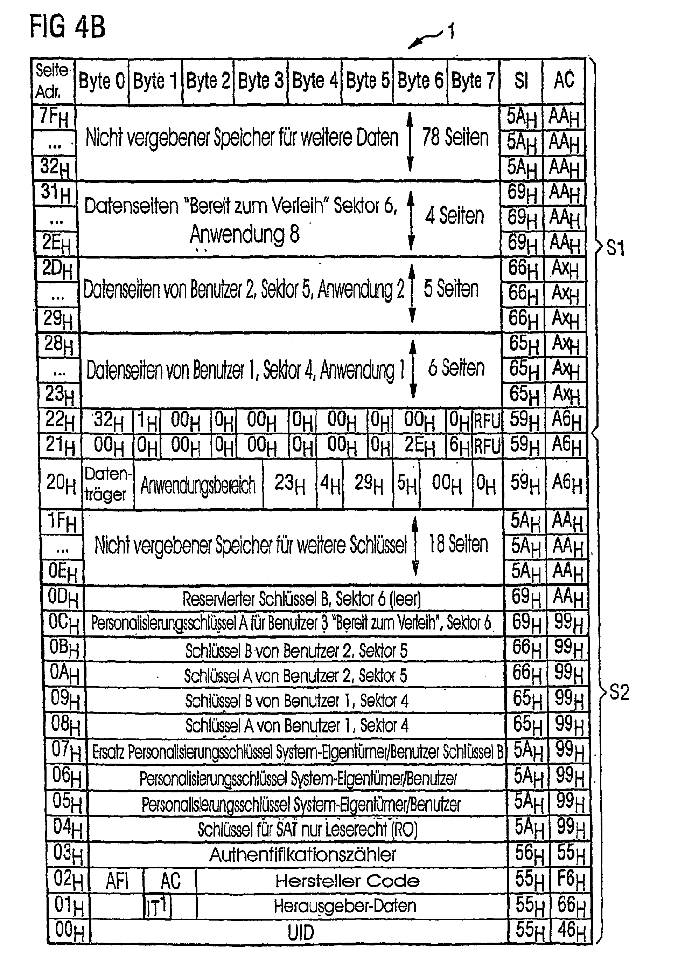

In der Figur 4b wurde dem Speicher 1 auf den Speicherseiten 2E bis 31 in einem weiteren Sektor eine weitere Applikation einprogrammiert. Die weitere Applikation weist die logische Applikationsnummer "8" auf, so dass der Eintrag an der achten Speicherposition im Feld 9 des Applikationsverzeichnisses erfolgt und der Eintrag auf die Startadresse 2E des weiteren Sektors, in dem die Applikation abgelegt ist, verweist.

In der Figur 4c wurde die Applikation mit der logischen Applikationsnummer "2" gelöscht, so dass diese Speicherseiten für eine zukünftige Applikation zur Verfügung stehen.

Das vorgeschlagenen Datenübertragungssystem ermöglicht eine flexible Nutzung eines in einem Datenträger integrierten Speichers, da Speicherbereiche jederzeit neuen Applikationen zuweisbar sind. Die Datenverarbeitungszeit wird wesentlich verkürzt, da ein Zugriff auf die Applikationen sehr schnell erfolgt.

## Patentansprüche

1. Datenübertragungssystem, zum Ausführen voneinander unabhängiger und durch geheime Schlüssel gegenseitig geschützter Applikationen, mit einem einen segmentierten Speicher (1) aufweisenden Datenträger und einem Schreib-/Lesegerät, wobei
- in dem Speicher (1) ein Applikationsverzeichnis abgelegt ist,
- das Applikationsverzeichnis ein Attribut zur Kennzeichnung eines Anwendungsbereichs des Datenträgers und mindestens eine, einer ausführbaren Applikation zugeordnete und durch das Attribut und einer logischen Applikationsnummer eindeutig spezifizierte physikalische Adresse aufweist,
- die logische Applikationsnummer als Index innerhalb des Applikationsverzeichnisses verwendet ist und
- das Schreib-/Lesegerät das Attribut und die logische Applikationsnummer der Applikation speichert, wobei
das Schreib-/Lesegerät eingerichtet ist zur Ausführung der Applikation die logische Applikationsnummer im Applikationsverzeichnis zum Indizieren zu verwenden und **dadurch** eine Startadresse eines Sektors des Speichers (1), in dem die ausführbare Applikation abgelegt ist, aufzufinden.

2. Datenübertragungssystem nach Anspruch 1,
**dadurch gekennzeichnet, daß**
eine ausführbare Applikation einen Sektor festgelegter Speichergröße belegt.

3. Datenübertragungssystem nach Anspruch 1,
**dadurch gekennzeichnet, daß**
die Anzahl der im Applikationsverzeichnis abgelegten, durch logischen Applikationsnummern spezifizierten, physikalischen Adressen der Anzahl ausführbarer Applikationen entspricht.

4. Datenübertragungssystem nach Anspruch 1,
**dadurch gekennzeichnet, daß**
das Applikationsverzeichnis als 8-byte breiter Datenblock in Speicherseiten des Speichers (1) abgelegt ist.

5. Datenübertragungssystem nach Anspruch 1,
**dadurch gekennzeichnet, daß**
das Attribut zur Kennzeichnung des Anwendungsbereichs des Datenträgers die ersten Bits des Applikationsverzeichnisses belegt, wobei die niederwertigen Bits zur Kennzeichnung des Datenträgers und die höherwertigen Bits zur Kennzeichnung des Anwendungsbereichs verwendet sind.

6. Datenübertragungssystem nach Anspruch 1,
**dadurch gekennzeichnet, daß**
im Speicher (1) applikationsspezifische Schlüssel abgelegt sind.

7. Datenübertragungssystem nach einem der vorherigen Ansprüche,
**dadurch gekennzeichnet, daß**
der logischen Applikationsnummer eine beliebige einen abgelegten Schlüssel spezifizierende Schlüsselnummer zugeordnet ist.

8. Datenübertragungssystem nach einem der vorherigen Ansprüche,
**dadurch gekennzeichnet, daß**
eine in einem Speicher des Schreib-/Lesegerätes abgelegte Tabelle, in der die Schlüsselnummer einer physikalischen Speicheradresse zugeordnet ist, an der der applikationsspezifische Schlüssel zur Ausführung der Applikation gespeichert ist.

9. Datenübertragungssystem nach Anspruch 1,
**dadurch gekennzeichnet, daß**
die Startadresse der Applikation in dem Sektor als Eintrag im Applikationsverzeichnis abgelegt ist, wobei die jeweilige Speicherposition des Eintrags der logischen Applikationsnummer entspricht.

10. Datenübertragungssystem nach Anspruch 7 oder 9,
**dadurch gekennzeichnet, daß**
jeder Eintrag 8 Bit und die Schlüsselnummer 4 Bit im Applikationsverzeichnis belegen.

11. Datenübertragungssystem nach einem der vorherigen Ansprüche,
**dadurch gekennzeichnet, daß**
der Speicher (1) ein weiteres Applikationsverzeichnis aufweist, welches über einen Eintrag im Applikationsverzeichnis aktivierbar ist.

12. Verfahren zum Betreiben eines Datenübertragungssystems, aufweisend einen Datenträger mit zumindest einer in einem Speicher (1) des Datenträgers abgelegten ausführbaren Applikation und einem abgelegten Applikationsverzeichnis, in dem ein Attribut zur Kennzeichnung eines dem Datenträger zugeordneten Anwendungsbereichs und eine über das Attribut und einer logische Applikationsnummer spezifizierte physikalische Adresse einer ausführbaren Applikation abgelegt ist, und ein Schreib-/Lesegerät, welches das Attribut und die der Applikation zugeordnete logische Applikationsnummer speichert, bei dem das Schreib-/Lesegerät
- vor der Ausführung der Applikation das Attribut auswertet, um festzustellen, ob der dem Datenträger zugeordnete Anwendungsbereich die Ausführung der Applikation vorsieht und
- bei positivem Ergebnis der Auswertung eine der ausführbaren Applikation korrespondierende logische Applikationsnummer im Applikationsverzeichnis als Index verwendet, um eine Startadresse eines Sektors des Speichers (1), in dem die ausführbare Applikation abgelegt ist, auszulesen.

13. Verfahren nach Anspruch 12,
**dadurch gekennzeichnet, daß**
im Applikationsverzeichnis der logischen Applikationsnummer eine physikalische Adresse einer Schlüsselnummer zugeordnet ist und das Schreib-/Lesegerät die Schlüsselnummer bei dem durch einen Schlüssel vor einem unberechtigten Zugriff geschützten Sektor ausliest.

14. Verfahren nach Anspruch 13,
**dadurch gekennzeichnet, daß**
das Schreib-/Lesegerät auf eine im Speicher (1) abgelegte Tabelle zugreift, in der der Schlüsselnummer eine physikalische Speicheradresse des für den Zugriff auf den Sektor notwendigen Schlüssels zugeordnet ist.

15. Verfahren nach Anspruch 12,
**dadurch gekennzeichnet, daß**
weitere im Applikationsverzeichnis abgelegte Startadressen weitere Sektoren angeben, wobei die maximale Anzahl ausführbarer Applikationen der maximalen Anzahl an logischen Applikationsnummern entspricht.

16. Verfahren nach Anspruch 12,
**dadurch gekennzeichnet, daß**
die Applikation aus einem Sektor löschbar ist und der Sektor innerhalb des Speichers (1) einer neuen programmierbaren Applikation zuteilbar ist.

## Claims

1. Data transmission system, for executing applications which are independent of one another and which are reciprocally protected by secret keys, having a data storage medium, which has a segmented memory (1), and a read/write unit,
where
- the memory (1) stores an application directory,
- the application directory has an attribute for identifying an application area of the data storage medium and has as least one physical address which is associated with an executable application and which is determinately specified by the attribute and a logical application number,
- the logical application number is used as an index within the application directory, and
- the read/write unit stores the attribute and the logical application number of the application,
where
the read/write unit is set up to execute the application by using the logical application number in the application directory for indexing and thereby to find a start address for a sector of the memory (1) which stores the executable application.

2. Data transmission system according to Claim 1,
**characterized in that**
an executable application occupies a sector of stipulated memory size.

3. Data transmission system according to Claim 1,
**characterized in that**
the number of physical addresses, specified by logical application numbers, stored in the application directory corresponds to the number of executable applications.

4. Data transmission system according to Claim 1,
**characterized in that**
the application directory is stored as an 8-byte data block in memory pages of the memory (1).

5. Data transmission system according to Claim 1,
**characterized in that**
the attribute for identifying the application area of the data storage medium occupies the first bits of the application directory, with the less significant bits being used to identify the data storage medium and the more significant bits being used to identify the application area.

6. Data transmission system according to Claim 1,
**characterized in that**
the memory (1) stores application-specific keys.

7. Data transmission system according to one of the preceding claims,
**characterized in that**
the logical application number has an arbitrary associated key number specifying a stored key.

8. The data transmission system according to one of the preceding claims,
**characterized by**
a table which is stored in a memory in the read/write unit and in which the key number is associated with a physical memory address at which the application-specific key for executing the application is stored.

9. Data transmission system according to Claim 1,
**characterized in that**
the start address of the application in the sector is stored as an entry in the application directory, with the respective memory position of the entry corresponding to the logical application number.

10. Data transmission system according to Claim 7 or 9,
**characterized in that**
each entry occupies 8 bits and the key number occupies 4 bits in the application directory.

11. Data transmission system according to one of the preceding claims,
**characterized in that**
the memory (1) has a further application directory which can be activated by means of an entry in the application directory.

12. Method for operating a data transmission system, having a data storage medium with at least one executable application stored in a memory of the data storage medium and a stored application directory which stores an attribute for identifying an application area associated with the data storage medium and a physical address, specified via the attribute and a logical application number, of an executable application, and having a read/write unit which stores the attribute and the logical application number associated with the application, in which the read/write unit
- evaluates the attribute, prior to execution of the application, in order to establish whether the application area associated with the data storage medium has provision for execution of the application, and
- if the result of the evaluation is positive, uses a logical application number, corresponding to the executable application, in the application directory as an index in order to read a start address for a sector of the memory (1) which stores the executable application.

13. Method according to Claim 12,
**characterized in that**
the application directory contains a physical address of a key number associated with the logical application number, and the read/write unit reads the key number for the sector protected by a key against unauthorized access.

14. Method according to Claim 13,
**characterized in that**
the read/write unit accesses a table which is stored in the memory (1) and in which the key number has an associated physical memory address for the key required for accessing the sector.

15. Method according to Claim 12,
**characterized in that**
further start addresses stored in the application directory indicate further sectors, with the maximum number of executable applications corresponding to the maximum number of logical application numbers.

16. The method according to Claim 12,
**characterized in that**
the application can be erased from a sector, and the sector can be assigned to a new programmable application within the memory (1).

## Revendications

1. Système de transmission de données, pour l'exécution d'applications indépendantes les unes des autres et mutuellement protégées par des clés secrètes, comprenant un support de données comportant une mémoire segmentée (1) et un appareil d'écriture / lecture, dans lequel
- un répertoire d'applications est enregistré dans la mémoire (1),
- le répertoire d'applications comporte un attribut pour la caractérisation d'un domaine d'application du support de données et au moins une adresse physique qui est associée à une application exécutable et qui est spécifiée sans équivoque par l'attribut et par un numéro d'application logique,
- le numéro d'application logique est utilisé comme indice à l'intérieur du répertoire d'applications, et
- l'appareil d'écriture / lecture mémorise l'attribut et le numéro d'application logique de l'application,
l'appareil d'écriture / lecture étant conçu, en vue de l'exécution de l'application, pour utiliser le numéro d'application logique comme indice dans le répertoire d'applications et pour retrouver ainsi une adresse de début d'un secteur de la mémoire (1) dans lequel l'application exécutable est enregistrée.

2. Système de transmission de données selon la revendication 1,
**caractérisé par le fait qu'**une application exécutable occupe un secteur d'une dimension de mémoire fixée.

3. Système de transmission de données selon la revendication 1,
**caractérisé par le fait que** le nombre des adresses physiques, enregistrées dans le répertoire d'applications et spécifiées par des numéros d'application logiques, correspond au nombre d'applications exécutables.

4. Système de transmission de données selon la revendication 1,
**caractérisé par le fait que** le répertoire d'applications est enregistré comme un bloc de données d'une largeur de 8 octets dans des pages de la mémoire (1).

5. Système de transmission de données selon la revendication 1,
**caractérisé par le fait que** l'attribut pour la caractérisation du domaine d'application du support de données occupe les premiers bits du répertoire d'applications, les bits de poids faible étant utilisés pour la caractérisation du support de données et les bits de poids fort pour la caractérisation du domaine d'application.

6. Système de transmission de données selon la revendication 1,
**caractérisé par le fait que** des clés spécifiques aux applications sont enregistrées dans la mémoire (1).

7. Système de transmission de données selon l'une des revendications précédentes,
**caractérisé par le fait qu'**un numéro de clé quelconque, spécifiant une clé enregistrée, est associé au numéro d'application logique.

8. Système de transmission de données selon l'une des revendications précédentes,
**caractérisé par le fait qu'**un tableau est enregistré dans une mémoire de l'appareil d'écriture / lecture, tableau dans lequel le numéro de clé est associé à une adresse de mémoire physique à laquelle la clé spécifique à l'application est mémorisée pour l'exécution de l'application.

9. Système de transmission de données selon la revendication 1,
**caractérisé par le fait que** l'adresse de début de l'application est enregistrée dans le secteur comme enregistrement dans le répertoire d'applications, la position en mémoire respective de l'enregistrement correspondant alors au numéro d'application logique.

10. Système de transmission de données selon la revendication 7 ou 9,
**caractérisé par le fait que** chaque enregistrement occupe 8 bits et le numéro de clé 4 bits dans le répertoire d'applications.

11. Système de transmission de données selon l'une des revendications précédentes,
**caractérisé par le fait que** la mémoire (1) comporte un autre répertoire d'applications qui est activable par l'intermédiaire d'un enregistrement dans le répertoire d'applications.

12. Procédé pour l'exploitation d'un système de transmission de données, comportant un support de données, ayant au moins une application exécutable enregistrée dans une mémoire (1) du support de données et ayant un répertoire d'applications enregistré dans lequel sont enregistrés un attribut pour la caractérisation d'un domaine d'application associé au support de données et une adresse physique, spécifiée par l'intermédiaire de l'attribut et d'un numéro d'application logique, d'une application exécutable, et comportant un appareil d'écriture / lecture qui mémorise l'attribut et le numéro d'application logique associé à l'application, dans lequel l'appareil d'écriture / lecture
- évalue l'attribut avant l'exécution de l'application pour vérifier si le domaine d'application associé au support de données prévoit l'exécution de l'application, et
- en cas de résultat positif de l'évaluation, utilise comme indice dans le répertoire d'applications un numéro d'application logique correspondant à l'application exécutable pour lire une adresse de début d'un secteur de la mémoire (1) dans lequel l'application exécutable est enregistrée.

13. Procédé selon la revendication 12,
**caractérisé par le fait que**, dans le répertoire d'applications, une adresse physique d'un numéro de clé est associée au numéro d'application logique et l'appareil d'écriture / lecture lit le numéro de clé dans un secteur protégé contre un accès non autorisé par une clé.

14. Procédé selon la revendication 13,
**caractérisé par le fait que** l'appareil d'écriture / lecture accède à un tableau qui est enregistré dans la mémoire (1) et dans lequel une adresse de mémoire physique de la clé nécessaire à l'accès au secteur est associée au numéro de clé.

15. Procédé selon la revendication 12,
**caractérisé par le fait que** d'autres adresses de début enregistrées dans le répertoire d'applications indiquent d'autres secteurs, le nombre maximal d'applications exécutables correspondant au nombre maximal de numéros d'application logiques.

16. Procédé selon la revendication 12,
**caractérisé par le fait que** l'application est effaçable d'un secteur et que le secteur à l'intérieur de la mémoire (1) peut être attribué à une nouvelle application programmable.
